(19) Europäisches Patentamt
European Patent Office
Office européen des brevets

(11) **EP 4 733 807 A1**

(12) **EUROPEAN PATENT APPLICATION**

(43) Date of publication:
**29.04.2026 Bulletin 2026/18**

(21) Application number: **25209710.0**

(22) Date of filing: **20.10.2025**

(51) International Patent Classification (IPC):
***G01S 15/00*** (2020.01)  ***G01S 15/86*** (2020.01)
***G01S 15/931*** (2020.01)

(52) Cooperative Patent Classification (CPC):
**G01S 15/86; G01S 15/003; G01S 15/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.10.2024 US 202463711424 P**

(71) Applicant: **Magna International Inc.
Aurora, ON L4G 7K1 (CA)**

(72) Inventors:
• **Knutzen, Julian
  TORONTO, ONTARIO M5J 2Y7 (CA)**
• **Farhat, Hussein
  DEARBORN HEIGHTS, MICHIGAN 48127 (US)**

(74) Representative: **Witte, Weller & Partner
Patentanwälte mbB
Postfach 10 54 62
70047 Stuttgart (DE)**

(54) **AUTOMOTIVE CAMERA WITH INTEGRATED ULTRASONIC TRANSMITTER/RECEIVER ARRAY**

(57) A camera module (20, 120, 220) for a vehicle includes: a housing (30, 130, 230) including a front surface (32) defining a plurality of receiver ports (34) and an emitter port (36); a lens (40) mounted on the front surface (32) of the housing (30, 130, 230); a camera imager sensor (50) disposed in the housing (30, 130, 230) and behind the lens (40) for receiving light via the lens (40); a plurality of ultrasonic sensors (44); and an ultrasonic transmitter / driver (46). Each of the ultrasonic sensors (44) is disposed in the housing (30, 130, 230) and overlying a corresponding one of the receiver ports (34). The ultrasonic transmitters (46) disposed in the housing (30, 130, 230) and overlying the emitter port (36) for directing ultrasonic energy therethrough.

**FIG. 2**

**Description**

FIELD

The present disclosure relates to a camera for a vehicle, such as a passenger car or truck, and which includes an integrated ultrasonic transmitter and/or receiver array.

BACKGROUND

This section provides background information related to the present disclosure which is not necessarily prior art.

Cameras may be used for a variety of applications in a vehicle, such as for parking assistance. Ultrasonic sensors may also be used to detect objects in proximity to a vehicle.

SUMMARY

This section provides a general summary of the disclosure, and is not a comprehensive disclosure of its full scope or all of its features.

The present disclosure provides a camera module for a vehicle. The camera module includes: a housing including a front surface defining a plurality of receiver ports and an emitter port; a lens mounted on the front surface of the housing; a camera imager sensor disposed in the housing and behind the lens for receiving light via the lens; a plurality of ultrasonic sensors; and an ultrasonic transmitter disposed in the housing and overlying the emitter port for directing ultrasonic energy therethrough. Each of the ultrasonic sensors is disposed in the housing and overlying a corresponding one of the receiver ports.

The present disclosure also provides a vehicle that includes at least one camera module configured to remotely sense an object outside of the vehicle. The at least one camera module includes: a housing including a front surface defining a plurality of receiver ports and an emitter port; a lens mounted on the front surface of the housing; a camera imager sensor disposed in the housing and behind the lens for receiving light via the lens; a plurality of ultrasonic sensors; and an ultrasonic transmitter disposed in the housing and overlying the emitter port for directing ultrasonic energy therethrough. Each of the ultrasonic sensors is disposed in the housing and overlying a corresponding one of the receiver ports.

Further areas of applicability will become apparent from the description provided herein. The description and specific examples in this summary are intended for purposes of illustration only and are not intended to limit the scope of the present disclosure.

BRIEF DESCRIPTION OF THE DRAWINGS

The drawings described herein are for illustrative purposes only of selected embodiments and not all possible implementations, and are not intended to limit the scope of the present disclosure.

FIG. 1 shows a side view of a vehicle;
FIG. 2 shows a perspective front view of a first camera module, in accordance with an aspect of the present disclosure; and
FIG. 3 shows a perspective rear view of the first camera module of FIG. 2, including interior components;
FIG. 4 shows a perspective front view of a second camera module, in accordance with an aspect of the present disclosure; and
FIG. 5 shows a perspective front view of a third camera module, in accordance with an aspect of the present disclosure;
FIG. 6 shows a schematic diagram illustrating spacing and distances between components of a camera module of the present disclosure, and a target;
FIG. 7 shows a schematic diagram illustrating spacing and distances between components of a camera module, according to some aspects of present disclosure; and
FIG. 8 shows a schematic diagram illustrating spacing and distances between components of a camera module, according to some aspects of present disclosure.

Corresponding reference numerals indicate corresponding parts throughout the several views of the drawings.

DETAILED DESCRIPTION

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The present disclosure provides an Automotive Camera with Integrated Ultrasonic Transmitter/Receiver Array. The automotive camera may include an Ultrasonic Phased Array consisting of at least one ultrasonic transmitter, at least three ultrasonic (MEMS) receivers and at least one microcontroller or ASIC to enable ultrasonic-based near-field sensing for park-assist or other functionalities is packaged into a camera housing. Data transfer with the ultrasonic array can either be managed through a separate standard and connector (e.g. CAN, LIN) or be overlaid with the video signal using for example time-synchronized metadata injection techniques. The invention provides an integrated solution e.g., for park assist features and functions, where the camera provides optical guidance to the driver while the range information to potential obstacles is obtained by the ultrasonic phased array. This information can be conveyed to the driver through visual, aural & other feedback techniques including visual overlay on the camera image.

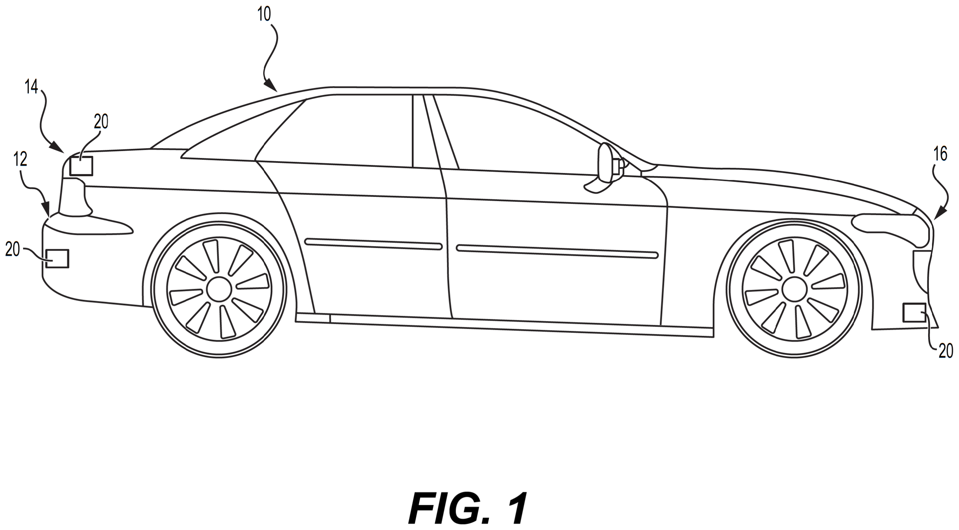

FIG. 1 shows a side view of a vehicle 10 including a rear fascia 12, a trunk lid 14, and a front fascia 16. The rear fascia 12 may include a rear bumper or rear bumper cover, and the front fascia 16 may include a front bumper cover. A first camera module 20 is mounted in each of the rear fascia 12, the trunk lid 14, and the front fascia 16 for monitoring areas around the vehicle 10. The trunk lid 14 is one example of a rear closure, and the first camera module 20 may be mounted in another rear closure of the vehicle 10, such as in a liftgate or tailgate of a car or pickup truck. Additionally or alternatively, the first camera module 20 may be mounted in anther exterior-facing structure, such as a body panel, a window frame, a side door, or a pillar.

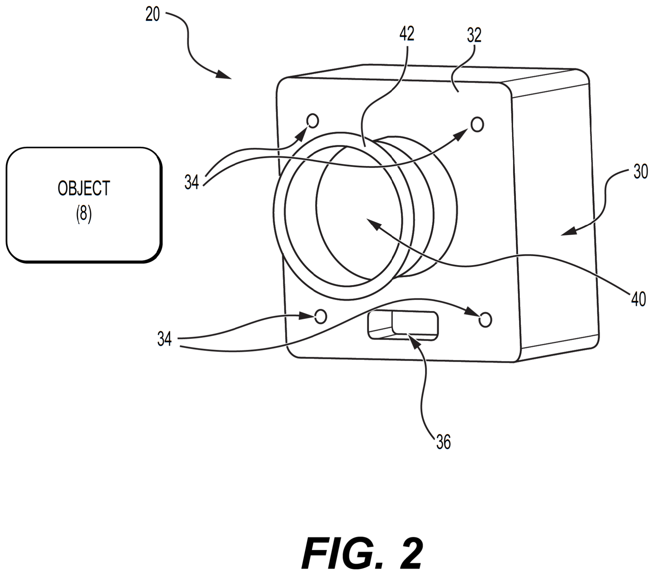

FIG. 2 shows a perspective front view of a first camera module 20, in accordance with the present disclosure. The first camera module 20 includes a first housing 30 defining a first front surface 32. A lens 40 is mounted to the front surface and arranged to direct and/or focus light. The lens 40 may be used for optically sensing an object 8 that is spaced apart from the vehicle 10. The first camera module 20 may provide a field of view to an area that is not directly visible to an operator of the vehicle, such as an area directly behind and/or directly in front of the vehicle 10. The first camera module 20 may be used to assist a driver in parking the vehicle 10 or for aligning a trailer hitch with a trailer. A lens shield 42 having a generally tubular shape extends outwardly from the first front surface 32 and surrounds the lens 40. The lens shield 42 may prevent sunlight or other indirect light source from entering the lens 40, thereby improving operation of an imaging system.

As shown, the first front surface 32 of the first housing 30 defines a plurality of receiver ports 34 for ultrasonic sensors. The first camera module 20 shown in FIG. 2 includes four of the receiver ports 34 in a square pattern surrounding the lens 40, with each having a circular shape. However, the first camera module 20 may include a different number of the receiver ports 34, and the receiver ports 34 may have a different shape. Additionally or alternatively, the receiver ports 34 may be arranged in a different pattern, such as in one or more lines. The first front surface 32 of the first housing 30 also defines an emitter port 36 for an ultrasonic driver and/or transmitter. The emitter port 36 has a generally rectangular shape and is disposed below the lens 40. However, the emitter port 36 may have a different shape and/or a different position on the first front surface 32 of the first housing 30.

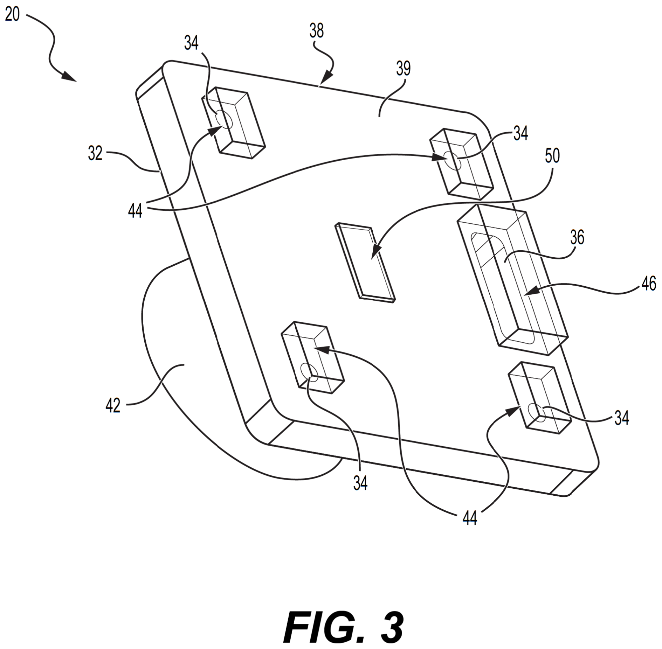

FIG. 3 shows a perspective rear view of the first camera module 20. FIG. 3 may include only a front panel 38 that defines the first front surface 32 and a rear surface 39 opposite from the first front surface 32. The first housing 30 may include other parts, such as side walls and/or a back panel, that enclose the internal components, but which are omitted from FIG. 3 in order to illustrate those internal components.

As shown on FIG. 3, the first camera module 20 includes a plurality of ultrasonic sensors 44. Each of the ultrasonic sensors 44 is disposed on the rear surface 39 and overlying a corresponding one of the receiver ports 34. Each of the ultrasonic sensors 44 may include a micro-electromechanical systems (MEMS) device. In some embodiments, the first camera module 20 may include at least three of the ultrasonic sensors 44. In some embodiments, and as shown in FIG. 3, the first camera module 20 may include four of the ultrasonic sensors 44. However, the first camera module 20 may include a different number of the ultrasonic sensors 44.

The first camera module 20 also includes an ultrasonic transmitter 46 that is also disposed on the rear surface 39 and which overlies the emitter port 36 for directing ultrasonic energy therethrough. The ultrasonic transmitter 46 may be alternatively called a driver/transmitter, or a transmitter/driver. The ultrasonic transmitter 46 may convert electrical energy to ultrasonic energy and to project that ultrasonic energy in a particular direction. The ultrasonic transmitter 46 may be configured to generate the ultrasonic energy with a specific range of frequencies for detecting objects 8 outside of the vehicle 10. The first camera module 20 also includes a camera imager 50 that is disposed on the rear surface 39 and behind the lens 40 for receiving light via the lens 40. The camera imager 50 may include an imaging sensor, such as a complementary metal-oxide-semiconductor (CMOS) image sensor.

In some embodiments, the first housing 30 of the first camera module 20 may include other devices, such as a printed circuit board (PCB), one or more processors or microcontroller units (MCUs), application-specific integrated circuits (ASICs), communication interfaces, and/or other circuitry for interfacing with the ultrasonic sensors 44, the ultrasonic transmitter 46, and/or the camera imager 50 and/or for communicating with external devices or systems.

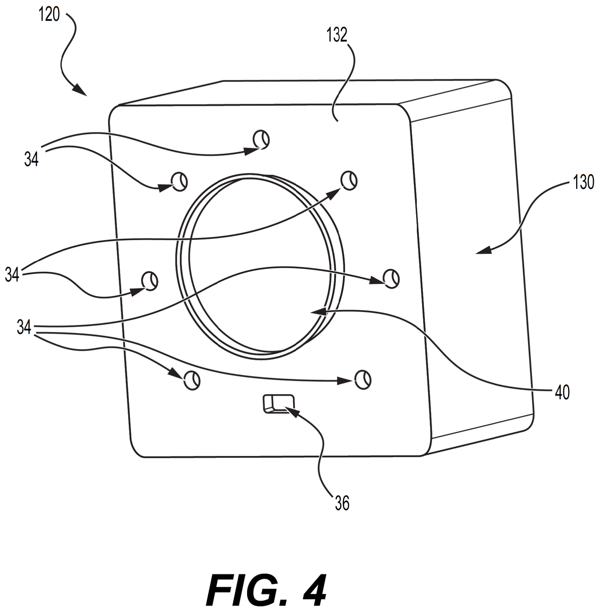

FIG. 4 shows a perspective front view of a second camera module 120. The second camera module 120 may be similar or identical to the first camera module 20, except for differences described herein. The second camera module 120 may be used in place of the first camera module 20 in one or more locations on the vehicle.

The second camera module 120 includes a second housing 130 defining a second front surface 132, which has a different configuration from the first front surface 32 of the first camera module 20. The second camera module 120 also includes a lens 40 located at or near a center of the second front surface 132. The second front surface 132 of the second camera module 120 defines seven of the receiver ports 34 disposed in an arc that extends around the lens 40. The second front surface 132 of the second camera module 120 also defines an emitter port 36 below the lens 40 and which is also disposed on the same arc with the receiver ports 34. The receiver ports 34 and the emitter port 36 are each located at 45-degree angular intervals along a circle that surrounds and is coaxial with the lens 40.

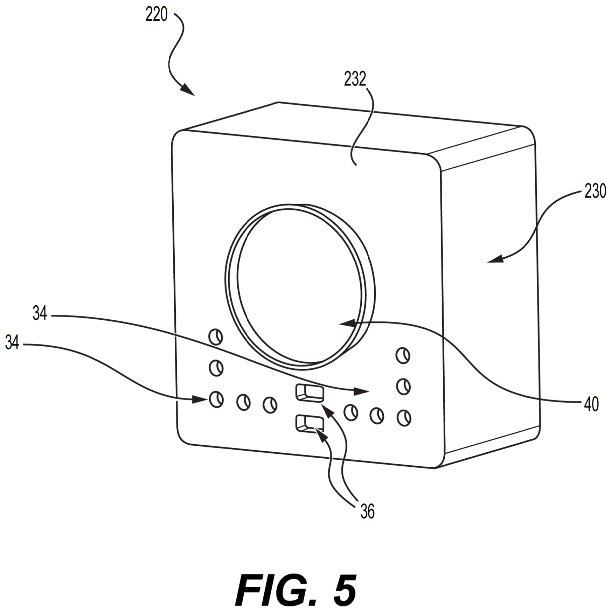

FIG. 5 shows a perspective front view of a third camera module 220. The third camera module 220 may be similar or identical to the first camera module 20, except for differences described herein. The third camera module 220 may be used in place of the first camera module 20 in one or more locations on the vehicle.

The third camera module 220 includes a third housing 230 defining a third front surface 232, which has a different configuration from the first front surface 32 of the first camera module 20. The third camera module 220 also includes a lens 40 located at or near a center of the third front surface 232. The third front surface 232 of the third camera module 220 defines ten of the receiver ports 34 disposed in two L-shaped groups. Each of the two L-shaped groups includes five of the receiver ports 34 disposed along and adjacent to a corresponding one of a lower-right and a lower-left corner of the third front surface 232. Each of the two L-shaped groups includes three of the receiver ports 34 stacked vertically and three of the receiver ports 34 arranged in a horizontal line. One of the receiver ports 34 in each of the L-shaped groups is located in both of the vertical stack and the horizontal line.

The third front surface 232 of the third camera module 220 also defines two of the emitter ports 36 below the lens 40 and which are stacked vertically along a vertical center line of the second camera module 120. A lower one of the emitter ports 36 is disposed between and just below the horizontal lines of each of the two L-shaped groups of the receiver ports 34. An upper one of the emitter ports 36 is disposed about mid-way between the lower one of the emitter ports 36 and the lens 40. The upper one of the emitter ports 36 is also disposed between and just above the horizontal lines of each of the two L-shaped groups of the receiver ports 34.

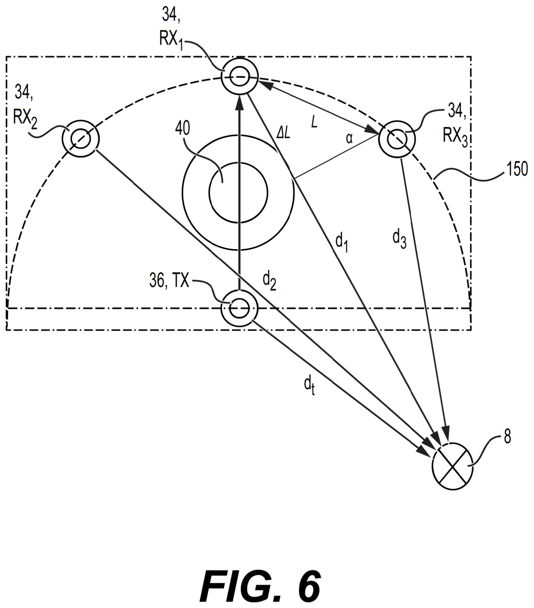

FIG. 6 shows a schematic diagram illustrating spacing and distances between components of a camera module and a target 8. The principles described herein may be applicable any of the camera module configurations, such as the first camera module 20, the second camera module 120, and/or the third camera module 220.

FIG. 6 shows an arrangement with three receivers $RX_1$, $RX_2$, $RX_3$ each located in a corresponding receiver port 34, and with a transmitter TX in an emitter port 36. The three receivers $RX_1$, $RX_2$, $RX_3$ are each located along a semicircular path 150, with the transmitter TX located at a center of the semicircular path 150. A first receiver $RX_1$ of the three receivers $RX_1$, $RX_2$, $RX_3$ is located at a twelve-o'clock position, directly above the transmitter TX. The lens 40 is located mid-way between the first receiver $RX_1$ and the transmitter TX. A second receiver $RX_2$ of the three receivers $RX_1$, $RX_2$, $RX_3$ is located 45-degrees counter-clockwise from the first receiver $RX_1$, and a third receiver $RX_3$ of the three receivers $RX_1$, $RX_2$, $RX_3$ is located 45-degrees clockwise from the first receiver $RX_1$. Adjacent ones of the three receivers $RX_1$, $RX_2$, $RX_3$ are spaced apart from one another by a baseline length $L$. For simplicity of the drawing, only one baseline length $L$ between the first receiver $RX_1$ and the third receiver $RX_3$ is labeled on FIG. 6.

The transmitter TX may be defined as having coordinates (0,0). The three receivers $RX_1$, $RX_2$, $RX_3$ would, therefore, have coordinates of (0,R), $\left( -R\sqrt{2}, R\sqrt{2} \right)$, and $\left( R\sqrt{2}, R\sqrt{2} \right)$, respectively, where R is a radius of the semicircular path 150.

A first path between the transmitter TX → the target 8 → the first receiver $RX_1$ gives a second (ToF) measurement: $\Delta T_1 = v(d_t + d_1)$, where v is the speed of sound, $d_t$ is a distance between the transmitter TX and the target 8, and $d_f$ is a distance between the target 8 and the first receiver $RX_1$. A second path between the transmitter TX → the target 8 → the second receiver $RX_2$ gives a longest (ToF) measurement: $\Delta T_2 = v(d_t + d_2)$, where $d_2$ is a distance between the target 8 and the second receiver $RX_2$. A third path between the transmitter TX → the target 8 → the third receiver $RX_3$ gives a shortest time-of-flight (ToF) measurement: $\Delta T_3 = v(d_t + d_3)$, where and $d_3$ is a distance between the target 8 and the third receiver $RX_3$.

Distance $d$ can be generally calculated based on vertical separation x and horizontal separation y as described in equation (1):

$$d = \sqrt{x^2 + y^2} \tag{1}$$

Therefore, the distances $d_1$, $d_2$, and $d_3$ can each be described by a corresponding one of equations (2) - (4):

$$d_1 = \sqrt{x^2 + (y - R)^2} \tag{2}$$

$$d_2 = \sqrt{\left( x + R\sqrt{2} \right)^2 + \left( y - R\sqrt{2} \right)^2} \tag{3}$$

$$d_3 = \sqrt{\left( x - R\sqrt{2} \right)^2 + \left( y - R\sqrt{2} \right)^2} \tag{4}$$

The total round trip distances for signals measured by the receivers $RX_1$, $RX_2$, and $RX_3$ can be described by equations (5) - (7):

$$v\Delta T_1 = d_t + d_1 = \sqrt{x^2 + y^2} + \sqrt{x^2 + \left( y - R\sqrt{2} \right)^2} \tag{5}$$

$$v\Delta T_2 = d_t + d_2 = \sqrt{x^2 + y^2} + \sqrt{\left( x + R\sqrt{2} \right)^2 + \left( y - R\sqrt{2} \right)^2} \tag{6}$$

$$v\Delta T_3 = d_t + d_3 = \sqrt{x^2 + y^2} + \sqrt{\left(x - R\sqrt{2}\right)^2 + \left(y - R\sqrt{2}\right)^2} \qquad (7)$$

Differences between signals measured by the receivers $RX_1$, $RX_2$, and $RX_3$ can be described by equations (8) - (9):

$$v(\varDelta T_1 - \varDelta T_2) = \sqrt{x^2 + \left(y - R\sqrt{2}\right)^2} - \sqrt{\left(x + R\sqrt{2}\right)^2 + \left(y - R\sqrt{2}\right)^2} \qquad (8)$$

$$v(\varDelta T_3 - \varDelta T_1) = \sqrt{\left(x - R\sqrt{2}\right)^2 + \left(y - R\sqrt{2}\right)^2} - \sqrt{x^2 + \left(y - R\sqrt{2}\right)^2} \qquad (9)$$

The system of equations, above, can be numerically solved based on the individual ToF measurements, which represent precise times it takes for a signal to travel from the transmitter TX to each of the receivers $RX_1$, $RX_2$, and $RX_3$ used in the system. Thus, the semi-circular configuration allows additional receivers to be added in order to increase a field-of-view (FoV) and range resolution of the system. However, increasing the number of receivers reduces the baseline length $L$ and, therefore, causes a corresponding reduction in angular resolution.

A path-length difference $\varDelta L$ between two adjacent receivers($RX_3$ & $RX_1$) can be written as equation (10):

$$\Delta L = d_1 - d_3 = v\left(\Delta T_1 - \Delta T_3\right) \qquad (10)$$

where v is the speed of sound and $L$ is a baseline length between the two adjacent receivers, $RX_1$ and $RX_3$, which can be described by equation (11):

$$L = R\sqrt{2 - \sqrt{2}} = 0.77R \qquad (11)$$

The baseline length $L$ and the path-length difference $\varDelta L$ can be represented as shown on FIG. 6, as a hypotenuse and an opposite side of an interior angle $\alpha$. This arrangement provides equations (12) - (15):

$$\sin(\alpha) = \frac{\Delta L}{L} \qquad (12)$$

$$\Delta L = L\sin(\alpha) \qquad (13)$$

$$\alpha = \sin^{-1}\left(\frac{v\left(\Delta T_1 - \Delta T_3\right)}{L}\right) \qquad (14)$$

$$\alpha = \sin^{-1}\left(\frac{v\left(\Delta T_1 - \Delta T_3\right)}{0.77R}\right) \qquad (14)$$

It is possible to increase both FOV and angular resolution simultaneously, without changing the number of transmitter or receiver devices. However, this may require arranging the receivers $RX_1$, $RX_2$, and $RX_3$ on a larger semicircular path 150, which may require a larger sensor that may not be acceptable for a given application.

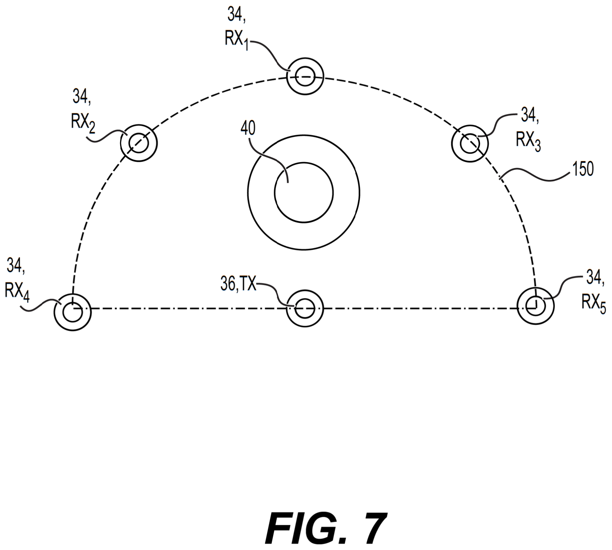

An alternative solution, which may provide cost savings, may include using more than one transmitter TX, creating a greater number of virtual array channels. For example, an arrangement with one transmitter TX and three of the

receivers RX$_1$, RX$_2$, and RX$_3$ provides three channels. An alternative arrangement with one transmitter TX at a center of the semicircular path 150 and five of the receivers RX$_1$, RX$_2$, RX$_3$, RX$_4$, and RX$_5$ is shown on FIG. 7. The arrangement of FIG. 7 includes: the first receiver RX$_1$ disposed directly above the lens 40, the second receiver RX$_2$ spaced apart from the first receiver RX$_1$ and located below and to a side of the first receiver RX$_1$, along the semicircular path 150 that intersects the first receiver; and the third receiver RX$_3$ spaced apart from the first receiver RX$_1$ and located on the semicircular path 150, below the first receiver RX$_1$ and on an opposite side from the second receiver. The arrangement shown on FIG. 7 also includes a fourth receiver RX$_4$ and a fifth receiver RX$_5$, each located on the semicircular path 150 and at regular angular intervals with the first receiver RX$_1$, the second receiver RX$_2$, and the third receiver RX$_3$. The receivers RX$_1$, RX$_2$, RX$_3$, RX$_4$, and RX$_5$ may each be spaced-apart from one-another at 45-degree angles, so the fourth receiver RX$_4$ and the fifth receiver RX$_5$ are on opposite sides of a centerline of the semicircular path 150, as shown on FIG. 7. However, the receivers RX$_1$, RX$_2$, RX$_3$, RX$_4$, and RX$_5$ may be spaced-apart by a different angular spacing.

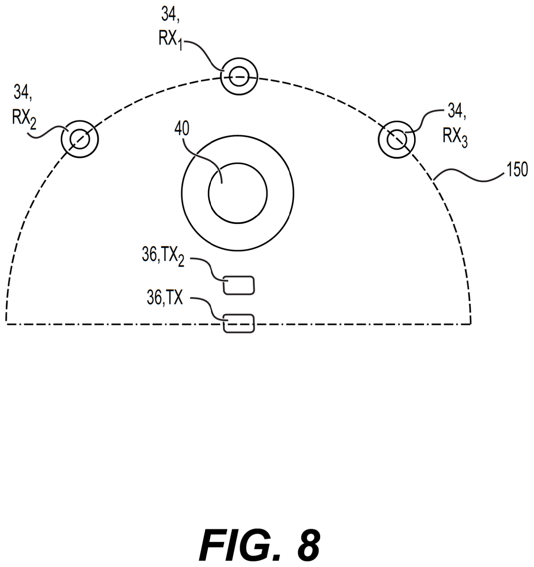

An alternative arrangement with two transmitters TX, TX$_2$ and three of the receivers RX$_1$, RX$_2$, and RX$_3$ is shown on FIG. 8 and provides six channels. The arrangement shown on FIG. 8 includes a first transmitter TX of the two transmitters TX, TX$_2$ located at a center of the semicircular path 150, and a second transmitter TX$_2$ on a radius of the semicircular path, directly above the first transmitter TX. However, the two transmitters TX, TX$_2$ may have a different position and/or configuration, such as a side-by-side configuration (not shown).

The arrangement of the transmitter TX and the receivers RX$_1$, RX$_2$, and RX$_3$ described herein has been shown to provide sufficient horizontal coverage with good angular resolution. Additionally, the provided arrangement is relatively easy to implement and has relatively low material costs. Additionally, the provided arrangement allows the use of known sensing algorithms, such as delay and sum beamforming, to estimate the angle of arrival (AoA). Moreover, combining AoA estimation with ToF provides a 3-dimensionsal (3D) point cloud, which can be used to locate the target 8 in 3D space.

FIG. 7 shows a schematic diagram illustrating spacing and distances between components of a camera module, according to some aspects of present disclosure, and FIG. 8 shows a schematic diagram illustrating spacing and distances between components of a camera module, according to some aspects of present disclosure.

The present disclosure provides a camera module for a vehicle. The camera module includes: a housing including a front surface defining a plurality of receiver ports and an emitter port; a lens mounted on the front surface of the housing; a camera imager sensor disposed in the housing and behind the lens for receiving light via the lens; a plurality of ultrasonic sensors; and an ultrasonic transmitter disposed in the housing and overlying the emitter port for directing ultrasonic energy therethrough. Each of the ultrasonic sensors is disposed in the housing and overlying a corresponding one of the receiver ports.

In some embodiments, the plurality of receiver ports are arranged in an arc. For example, the receiver ports 34 may be arranged as shown on FIG. 4 or as shown on FIG. 6.

In some embodiments, the lens is located within the arc. For example, the lens 40 may be centered within the arc, as shown on FIG. 4. Alternatively, the lens 40 may be located along a radius, mid-way between the center and the arc, as shown on FIG. 6. However, the lens 40 may be located elsewhere within the arc.

In some embodiments, the arc defines a section of a circle. For example, the arc may be circular, as shown on FIG. 4. Alternatively, the arc may define a semicircle, as shown on FIG. 6. However, the arc may have a non-circular shape, such as a section of a parabola or an oval.

In some embodiments, the emitter port is located on the arc. For example, the emitter port 36 may be located on or adjacent to the arc, as shown on FIG. 4.

In some embodiments, the emitter port is located at a center of the arc. For example, the emitter port 36 may be located at a center of a semicircular arc, as shown on FIG. 6.

In some embodiments, the emitter port is located on a radius of the arc. For example, the emitter port 36 may be located immediately above or below the center of the arc, as would be the case for the camera module arrangement shown on FIG. 6, with a second emitter port located directly above or below the emitter port 36, like the two emitter ports 36 of the third camera module 220 shown on FIG. 5.

In some embodiments, the front surface of the housing further defines a second emitter port, and wherein the camera module further includes a second ultrasonic transmitter disposed in the housing and overlying the second emitter port for directing ultrasonic energy therethrough. For example, the two emitter ports 36 and the corresponding ultrasonic transmitters may be arranged as shown on FIG. 5.

In some embodiments, the emitter port and the second emitter port are each located below the lens and in a stacked arrangement. For example, the two emitter ports 36 may be arranged as shown on FIG. 5.

In some embodiments, the plurality of receiver ports may include at least three of the receiver ports. For example, the receiver ports 34 may be arranged as shown on FIG. 6. In some embodiments, the plurality of receiver ports may include at least five of the receiver ports. In some embodiments, the plurality of receiver ports may include at least seven of the receiver ports. For example, the receiver ports 34 may be arranged as shown on FIG. 4.

In some embodiments, the plurality of ultrasonic sensors includes: a first receiver disposed directly above the lens; a second receiver spaced apart from the first receiver and located below and to a side of the first receiver along a semicircular path that intersects the first receiver; and a third receiver spaced apart from the first receiver and located on the semicircular path, below the first receiver and on an opposite side from the second receiver. For example, the receiver ports 34 may be arranged as shown on FIG. 6.

In some embodiments, the ultrasonic transmitter is located at a center of the semicircular path. For example, the ultrasonic transmitter may be aligned with the emitter port 36 at a center of the semicircular path, as shown on FIG. 6.

In some embodiments, the camera module further includes: a fourth receiver and a fifth receiver, each located on the semicircular path and at regular angular intervals with the first receiver, the second receiver, and the third receiver. For example, the fourth receiver and the fifth receiver may be aligned with corresponding receiver ports 34, as shown on FIG. 7.

In some embodiments, the plurality of receiver ports are arranged in two L-shaped groups, with each L-shaped group including five of the receiver ports disposed along and adjacent to a corresponding one of a lower-right and a lower-left corner of the front surface of the housing. For example, the camera module may have the arrangement shown on FIG. 5.

In some embodiments, the front surface of the housing further defines a second emitter port, the camera module further includes a second ultrasonic transmitter disposed in the housing and overlying the second emitter port for directing ultrasonic energy therethrough, and the emitter port and the second emitter port are each located below the lens and in a stacked arrangement. For example, the camera module may have two emitter ports 36 in a stacked arrangement below the lens 40, as shown on FIG. 5 and/or as shown on FIG. 8.

The present disclosure also provides a vehicle that includes at least one camera module configured to remotely sense an object outside of the vehicle. The at least one camera module includes: a housing including a front surface defining a plurality of receiver ports and an emitter port; a lens mounted on the front surface of the housing; a camera imager sensor disposed in the housing and behind the lens for receiving light via the lens; a plurality of ultrasonic sensors; and an ultrasonic transmitter disposed in the housing and overlying the emitter port for directing ultrasonic energy therethrough. Each of the ultrasonic sensors is disposed in the housing and overlying a corresponding one of the receiver ports.

In some embodiments, the at least one camera module is disposed in at least one of: a back fascia, a front fascia, or a rear closure of the vehicle.

In some embodiments, the plurality of receiver ports are arranged in an arc.. For example, the receiver ports 34 may be arranged as shown on FIG. 4 or as shown on FIG. 6.

In some embodiments, the arc defines a section of a circle, and wherein the emitter port is located at a center of the arc. For example, the emitter port 36 may be located at a center of a semicircular arc, as shown on FIG. 6.

In some embodiments, the front surface of the housing further defines a second emitter port, and wherein the camera module further includes a second ultrasonic transmitter disposed in the housing and overlying the second emitter port for directing ultrasonic energy therethrough. For example, the two emitter ports 36 and the corresponding ultrasonic transmitters may be arranged as shown on FIG. 5.

**Claims**

1. A camera module (20, 120, 220) for a vehicle, comprising:

   a housing (30, 130, 230) including a front surface (32) defining a plurality of receiver ports (34) and an emitter port (36);
   a lens (40) mounted on the front surface (32) of the housing (30, 130, 230);
   a camera imager sensor (50) disposed in the housing (30, 130, 230) and behind the lens (40) for receiving light via the lens;
   a plurality of ultrasonic sensors (44), wherein each of the ultrasonic sensors (44) is disposed in the housing (30, 130, 230) and overlying a corresponding one of the receiver ports (34); and
   an ultrasonic transmitter (46) disposed in the housing (30, 130, 230) and overlying the emitter port (36) for directing ultrasonic energy therethrough.

2. The camera module (20, 120, 220) of Claim 1, wherein the plurality of receiver ports (34) are arranged in an arc.

3. The camera module (20, 120, 220) of Claim 2, wherein the lens (40) is located within the arc.

4. The camera module (20, 120, 220) of Claim 2 or 3, wherein the arc defines a section of a circle.

5. The camera module (20, 120, 220) of any one of Claims 2 to 4, wherein the emitter port (36) is located on the arc or at a center of the arc or on a radius of the arc.

6. The camera module (20, 120, 220) of any one of Claims 1 to 5, wherein the front surface (32) of the housing (30, 130, 230) further defines a second emitter port, and wherein the camera module (20, 120, 220) further includes a second ultrasonic transmitter disposed in the housing (30, 130, 230) and overlying the second emitter port for directing ultrasonic energy therethrough.

7. The camera module (20, 120, 220) of Claim 6, wherein the emitter port and the second emitter port are each located below the lens (40) and in a stacked arrangement.

8. The camera module (20, 120, 220) of any one of Claims 1 to 7, wherein the plurality of receiver ports (34) includes at least three of the receiver ports.

9. The camera module (20, 120, 220) of any one of Claims 1 to 8, wherein the plurality of ultrasonic sensors (44) includes:

a first receiver ($RX_1$) disposed directly above the lens (40);
a second receiver ($RX_2$) spaced apart from the first receiver ($RX_1$) and located below and to a side of the first receiver ($RX_1$) along a semicircular path that intersects the first receiver ($RX_1$); and
a third receiver ($RX_3$) spaced apart from the first receiver ($RX_1$) and located on the semicircular path, below the first receiver ($RX_1$) and on an opposite side from the second receiver ($RX_2$).

10. The camera module (20, 120, 220) of Claim 9, wherein the ultrasonic transmitter (46) is located at a center of the semicircular path, and/or further including: a fourth receiver ($RX_4$) and a fifth receiver ($RX_5$), each located on the semicircular path and at regular angular intervals with the first receiver, the second receiver, and the third receiver.

11. The camera module (20, 120, 220) of any one of Claims 1 to 10, wherein the plurality of receiver ports (34) are arranged in two L-shaped groups, with each L-shaped group including five of the receiver ports disposed along and adjacent to a corresponding one of a lower-right and a lower-left corner of the front surface of the housing.

12. The camera module (20, 120, 220) of any one of Claims 1 to 11, wherein the front surface (32) of the housing (30, 130, 230) further defines a second emitter port,

wherein the camera module (20, 120, 220) further includes a second ultrasonic transmitter disposed in the housing (30, 130, 230) and overlying the second emitter port for directing ultrasonic energy therethrough, and wherein the emitter port and the second emitter port are each located below the lens (40) and in a stacked arrangement.

13. A vehicle (10), comprising:

at least one camera module (20, 120, 220) according to any one of claims 1 to 12 configured to remotely sense an object outside of the vehicle.

14. The vehicle (10) of Claim 13, wherein the at least one camera module (20, 120, 220) is disposed in at least one of: a back fascia, a front fascia, or a rear closure of the vehicle.

**FIG. 1**

FIG. 2

FIG. 3

**FIG. 4**

EP 4 733 807 A1

**FIG. 5**

EP 4 733 807 A1

**FIG. 6**

EP 4 733 807 A1

*FIG. 7*

**FIG. 8**

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/076526 A1 (AIKYO HIDEYUKI [JP] ET AL) 5 April 2007 (2007-04-05) * abstract; figures 1-6, 9 * * paragraphs [0021] - [0036], [0064], [0081] * | 1-14 | INV. G01S15/00 G01S15/86 G01S15/931 |
| A | US 2022/390598 A1 (SOLDNER NICHOLAS C [US] ET AL) 8 December 2022 (2022-12-08) * abstract; figures 1-3 * * paragraphs [0027] - [0029] * | 1-14 | |
| A | US 2008/142713 A1 (BREED DAVID S [US] ET AL) 19 June 2008 (2008-06-19) * abstract; figures 1-6 * * paragraphs [0481] - [0486] * | 1-14 | |

TECHNICAL FIELDS
SEARCHED (IPC)

G01S

The present search report has been drawn up for all claims

| Place of search | Date of completion of the search | Examiner |
|---|---|---|
| Munich | 11 February 2026 | Cordeiro, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 9710

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2026

| Patent document cited in search report | Publication date | Patent family member(s) | | Publication date |
|---|---|---|---|---|
| US 2007076526 A1 | 05-04-2007 | JP | 4760272 B2 | 31-08-2011 |
| | | JP | 2007098967 A | 19-04-2007 |
| | | US | 2007076526 A1 | 05-04-2007 |
| US 2022390598 A1 | 08-12-2022 | CN | 112673276 A | 16-04-2021 |
| | | US | 2020081120 A1 | 12-03-2020 |
| | | US | 2021302572 A1 | 30-09-2021 |
| | | US | 2022390598 A1 | 08-12-2022 |
| | | WO | 2020051469 A1 | 12-03-2020 |
| US 2008142713 A1 | 19-06-2008 | NONE | | |

EPO FORM P0459

For more details about this annex : see Official Journal of the European Patent Office, No. 12/82